# EUROPEAN PATENT APPLICATION

(11) **EP 4 246 266 A1**
(43) Date of publication of application: **20.09.2023**
(21) Application number: 23162325.7
(22) Date of filing: 16.03.2023
(51) Int. Cl.: G05B 23/02

(54) **BUILDING AUTOMATION SYSTEM WITH REMOTE ADVISORY SERVICES**

(30) Priority: 17.03.2022 IN 202221014783
(71) Applicant: Johnson Controls Tyco IP Holdings LLP, Milwaukee, WI 53209 (US)
(72) Inventor: WAGHMARE, Tulshiram, 411061 Pimple Gurav, Pune (IN); DIVILA, Dilip, 507001 Khammam, Telangana (IN); JOSHI, Vishwesh Pradeep, 411037 Pune, Maharashtra (IN)
(74) Representative: Meissner Bolte Partnerschaft mbB

(57) **Abstract**

One embodiment of the present disclosure is a system. The system includes one or more memory devices having instructions stored thereon that, when executed by one or more processors, cause the one or more processors to perform operations. The operations include: receiving operating data for one or more pieces of building equipment, determining one or more building faults for the one or more pieces of building equipment based on the operating data, using a fault categorization model to categorize the one or more building faults as remote fix faults or on-site fix faults based on the operating data, and performing an automated action based on a categorization of the one or more building faults as remote fix faults or on-site fix faults.

## Description

### CROSS-REFERENCE TO RELATED APPLICATIONS

The present application claims priority to and the benefit of Indian Provisional Patent Application No. 202221014783, filed March 17, 2022, which is incorporated herein by reference in its entirety.

### BACKGROUND

The present disclosure relates generally to building management systems (BMSs) and, more specifically, to categorizing and automatically resolving faults within a building.

Fault detection is a fundamental element found in most BMSs. Equipment faults increase energy consumption, decrease equipment lifespans, increase costs related to resolving the faults, and cause other undesirable effects. Often building faults may be repaired by an on-site maintenance team; however, on-site maintenance may incur significant costs. It is challenging to develop fault detection, categorization, and repair strategies for BMSs that do not incur significant costs related to on-site maintenance.

### SUMMARY

One embodiment of the present disclosure is a system. The system includes one or more memory devices having instructions stored thereon that, when executed by one or more processors, cause the one or more processors to perform operations. The operations include: receiving operating data for one or more pieces of building equipment, determining one or more building faults for the one or more pieces of building equipment based on the operating data, using a fault categorization model to categorize the one or more building faults as remote fix faults or on-site fix faults based on the operating data, and performing an automated action based on a categorization of the one or more building faults as remote fix faults or on-site fix faults.

Another embodiment of the present disclosure is a method. The method includes: receiving operating data for one or more pieces of building equipment, determining one or more building faults for the one or more pieces of building equipment based on the operating data, using a fault categorization model to categorize the one or more building faults as remote fix faults or on-site fix faults based on the operating data, and performing an automated action based on a categorization of the one or more building faults as remote fix faults or on-site fix faults.

Yet another embodiment of the present disclosure is non-transitory computer-readable media. The non-transitory computer-readable media includes computer-readable instructions stored thereon that when executed by a processor cause the processor to perform operations. The operations include: receiving operating data for one or more pieces of building equipment, determining one or more building faults for the one or more pieces of building equipment based on the operating data, using a fault categorization model to categorize the one or more building faults as remote fix faults or on-site fix faults based on the operating data, and performing an automated action based on a categorization of the one or more building faults as remote fix faults or on-site fix faults.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a drawing of a building equipped with a HVAC system, according to some embodiments.
FIG. 2 is a block diagram of a waterside system that may be used in conjunction with the building of FIG. 1, according to some embodiments.
FIG. 3 is a block diagram of an airside system that may be used in conjunction with the building of FIG. 1, according to some embodiments.
FIG. 4 is a block diagram of a building management system (BMS) that may be used to monitor and/or control the building of FIG. 1, according to some embodiments.
FIG. 5 is a block diagram of a system for monitoring various components of a BMS and detecting and categorizing faults, according to some embodiments.
FIG. 6 is a block diagram of a fault determination and categorization tool implemented in the system of FIG. 5, according to some embodiments.
FIG. 7 is a process for detecting and categorizing one or more faults for the building of FIG. 1, according to some embodiments.
FIG. 8 is a block diagram of a remote fault verification tool implemented in the system of FIG. 5, according to some embodiments.
FIG. 9 is a process for verifying that the one or more faults for the building of FIG. 1 have been resolved, according to some embodiments.
FIG. 10 is an example user interface for graphically presenting the one or more faults of FIG. 7 to a user, according to some embodiments.
FIG. 11 is an example user interface for graphically presenting the one or more faults of FIG. 7 to a user, according to some embodiments.
FIG. 12 are example user interfaces for graphically presenting the one or more faults of FIG. 7 to a user, according to some embodiments.
FIG. 13 is an example user interface for graphically presenting a BMS performance index (BPI) of one or more BMSs, according to some embodiments.
FIG. 14 is an example user interface for graphically presenting a maintenance task report for a BMS, according to some embodiments.

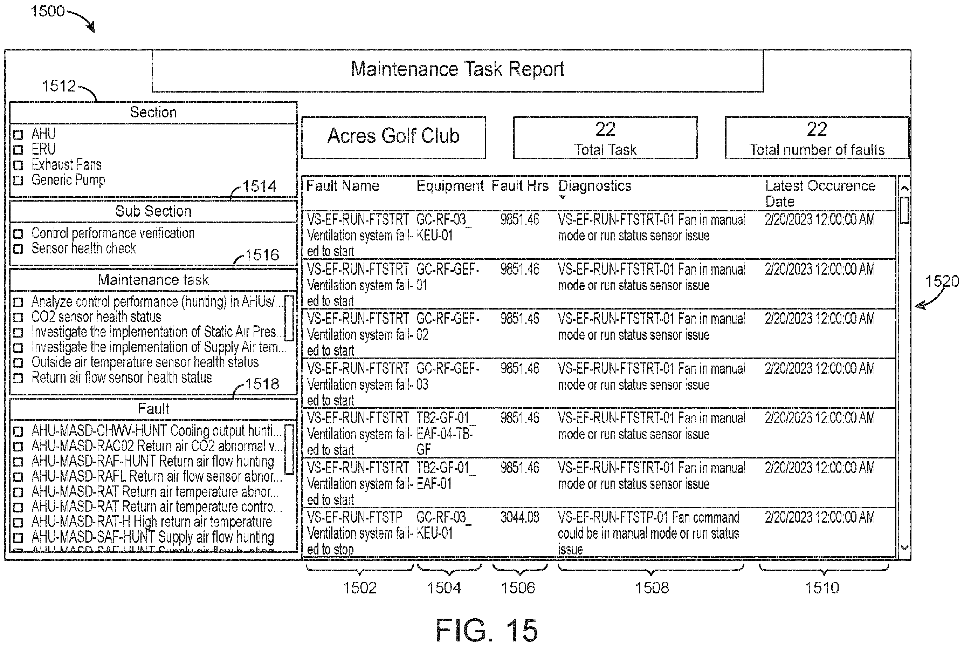

FIG. 15 is another example user interface for graphically presenting a maintenance task report for a BMS, according to some embodiments.
FIG. 16, is another example user interface for graphically presenting a maintenance task report for a BMS, according to some embodiments.

### DETAILED DESCRIPTION

Before turning to the figures, which illustrate the exemplary embodiments in detail, it should be understood that the disclosure is not limited to the details or methodology set forth in the description or illustrated in the figures. It should also be understood that the terminology is for the purpose of description only and should not be regarded as limiting.

Referring generally to the FIGURES, systems and methods for detecting and categorizing faults are shown, according to some embodiments. BMSs receive fault indications from varying subsystems and devices. A server or a client front- end may cause the fault to be reported to a user via, e.g., a graphical user interface. BMSs may analyze data (e.g., trends, statistics, etc.) to determine whether to detect a fault and categorize the fault. More specifically, the fault may be categorized as "remote fix" fault or an "on-site fix" fault. A "remote fix" fault may be described as a building fault that may be resolved remotely without a technician being required to visit site of the fault. On the other hand, an "on-site fix" fault may be described as building fault that requires an "on-site" visit by a technician to be repaired. For example, a fault related to a software and/or firmware version of a piece of building equipment may be categorized as a "remote fix" fault because it may be resolved remotely. As another example, a fault related to sensor abnormality categorized as an "on-site fix" fault because it may require that a technician visit the site of the fault to repair the fault.

The present disclosure relates to systems and methods for detecting and categorizing faults within a building. More specifically, a fault categorization model may be developed based on one or more rules that is structured to analyze and categorize the faults. Furthermore, the present disclosure also describes systems and methods for verifying that the faults which have been detected and categorized have been resolved. The systems and methods described herein can advantageously help building managers and administrators save costs by categorizing faults as "remote fix" and "on-site fix" before sending a technician or maintenance team on site to repair a fault so that technicians are only sent out for faults that require on-site repair.

### Building with Building Systems

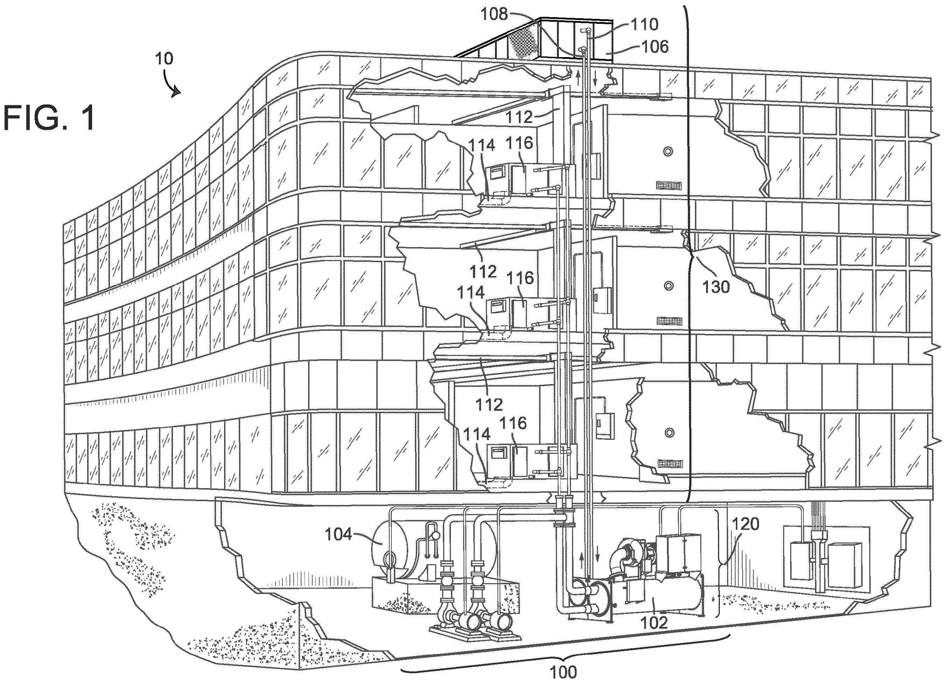

Referring now to FIGS. 1-4, an exemplary BMS and HVAC system in which the systems and methods of the present disclosure can be implemented are shown, according to some embodiments. Referring particularly to FIG. 1, a perspective view of a building 10 is shown. Building 10 is served by a BMS. A BMS is, in general, a system of devices configured to control, monitor, and manage equipment in or around a building or building area. A BMS can include, for example, a HVAC system, a security system, a lighting system, a fire safety system, any other system that is capable of managing building functions or devices, or any combination thereof.

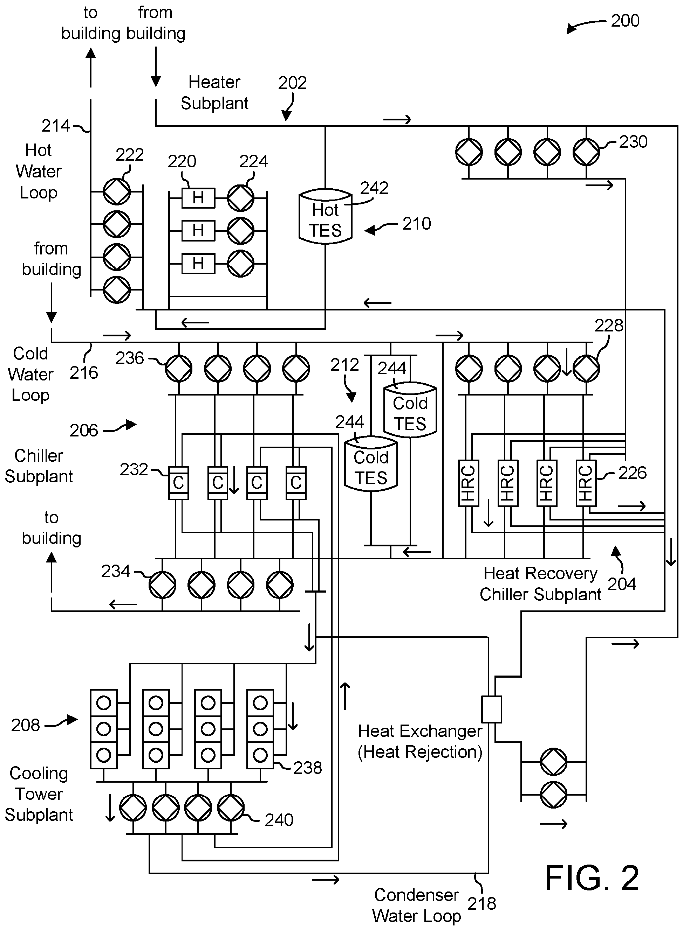

The BMS that serves building 10 includes an HVAC system 100. HVAC system 100 can include a plurality of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 can provide a heated or chilled fluid to an air handling unit of airside system 130. Airside system 130 can use the heated or chilled fluid to heat or cool an airflow provided to building 10. An exemplary waterside system and airside system which can be used in HVAC system 100 are described in greater detail with reference to FIGS. 2-3.

HVAC system 100 is shown to include a chiller 102, a boiler 104, and a rooftop air handling unit (AHU) 106. Waterside system 120 can use boiler 104 and chiller 102 to heat or cool a working fluid (e.g., water, glycol, etc.) and can circulate the working fluid to AHU 106. In various embodiments, the HVAC devices of waterside system 120 can be located in or around building 10 (as shown in FIG. 1) or at an offsite location such as a central plant (e.g., a chiller plant, a steam plant, a heat plant, etc.). The working fluid can be heated in boiler 104 or cooled in chiller 102, depending on whether heating or cooling is required in building 10. Boiler 104 can add heat to the circulated fluid, for example, by burning a combustible material (e.g., natural gas) or using an electric heating element. Chiller 102 can place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 can be transported to AHU 106 via piping 108.

AHU 106 can place the working fluid in a heat exchange relationship with an airflow passing through AHU 106 (e.g., via one or more stages of cooling coils and/or heating coils). The airflow can be, for example, outside air, return air from within building 10, or a combination of both. AHU 106 can transfer heat between the airflow and the working fluid to provide heating or cooling for the airflow. For example, AHU 106 can include one or more fans or blowers configured to pass the airflow over or through a heat exchanger containing the working fluid. The working fluid can then return to chiller 102 or boiler 104 via piping 110.

Airside system 130 can deliver the airflow supplied by AHU 106 (i.e., the supply airflow) to building 10 via air supply ducts 112 and can provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 can include dampers or other flow control elements that can be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 can include various sensors (e.g., temperature sensors, pressure sensors, etc.) configured to measure attributes of the supply airflow. AHU 106 can receive input from sensors located within AHU 106 and/or within the building zone and can adjust the flow rate, temperature, or other attributes of the supply airflow through AHU 106 to achieve setpoint conditions for the building zone.

In FIG. 2, waterside system 200 is shown as a central plant having a plurality of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve the thermal energy loads (e.g., hot water, cold water, heating, cooling, etc.) of a building or campus. For example, heater subplant 202 may be configured to heat water in a hot water loop 214 that circulates the hot water between heater subplant 202 and building 10. Chiller subplant 206 may be configured to chill water in a cold water loop 216 that circulates the cold water between chiller subplant 206 building 10. Heat recovery chiller subplant 204 may be configured to transfer heat from cold water loop 216 to hot water loop 214 to provide additional heating for the hot water and additional cooling for the cold water. Condenser water loop 218 may absorb heat from the cold water in chiller subplant 206 and reject the absorbed heat in cooling tower subplant 208 or transfer the absorbed heat to hot water loop 214. Hot TES subplant 210 and cold TES subplant 212 may store hot and cold thermal energy, respectively, for subsequent use.

Hot water loop 214 and cold water loop 216 may deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air may be delivered to individual zones of building 10 to serve the thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO2, etc.) may be used in place of or in addition to water to serve the thermal energy loads. In other embodiments, subplants 202-212 may provide heating and/or cooling directly to the building or campus without requiring an intermediate heat transfer fluid. These and other variations to waterside system 200 are within the teachings of the present invention.

Each of subplants 202-212 may include a variety of equipment configured to facilitate the functions of the subplant. For example, heater subplant 202 is shown to include a plurality of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a plurality of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a plurality of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a plurality of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 may also include one or more pumps or valves configured to control the flow rate of the hot water into or out of hot TES tank 242. Cold TES subplant 212 is shown to include cold TES tanks 244 configured to store the cold water for later use. Cold TES subplant 212 may also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves may be integrated with the pumps or positioned upstream or downstream of the pumps to control the fluid flows in waterside system 200. In various embodiments, waterside system 200 may include more, fewer, or different types of devices and/or subplants based on the particular configuration of waterside system 200 and the types of loads served by waterside system 200.

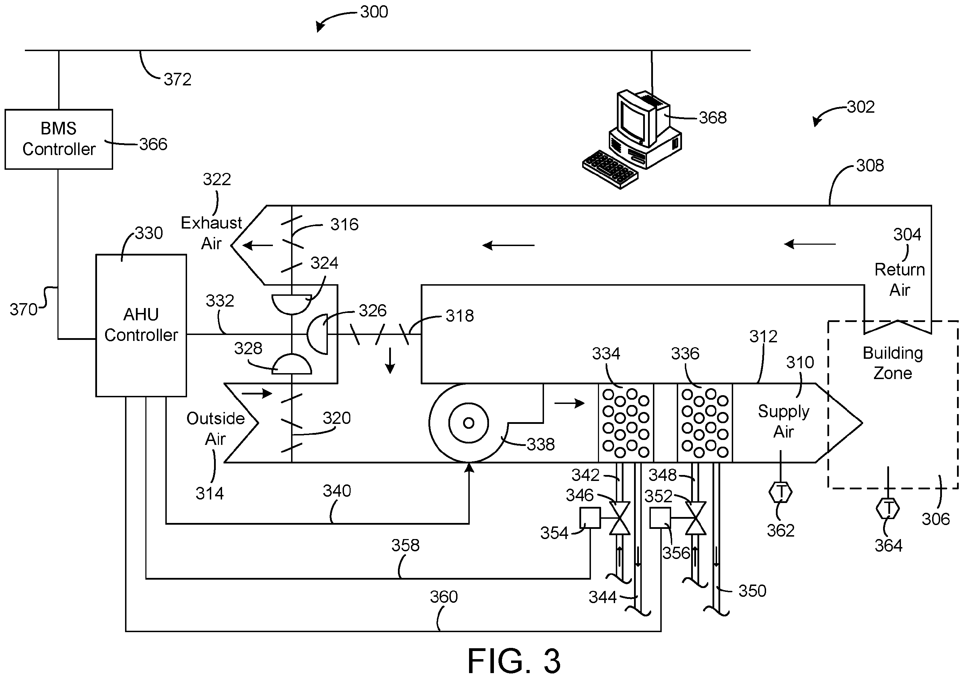

Referring now to FIG. 3, a block diagram of an airside system 300 is shown, according to some embodiments. In various embodiments, airside system 300 may supplement or replace airside system 130 in HVAC system 100 or may be implemented separate from HVAC system 100. When implemented in HVAC system 100, airside system 300 may include a subset of the HVAC devices in HVAC system 100 (e.g., AHU 106, VAV units 116, ducts 112-114, fans, dampers, etc.) and may be located in or around building 10. Airside system 300 may operate to heat or cool an airflow provided to building 10 using a heated or chilled fluid provided by waterside system 200.

In FIG. 3, airside system 300 is shown to include an economizer-type air handling unit (AHU) 302. Economizer-type AHUs vary the amount of outside air and return air used by the air handling unit for heating or cooling. For example, AHU 302 may receive return air 304 from building zone 306 via return air duct 308 and may deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 may be configured to operate exhaust air damper 316, mixing damper 318, and outside air damper 320 to control an amount of outside air 314 and return air 304 that combine to form supply air 310. Any return air 304 that does not pass through mixing damper 318 may be exhausted from AHU 302 through exhaust damper 316 as exhaust air 322.

Each of dampers 316-320 may be operated by an actuator. For example, exhaust air damper 316 may be operated by actuator 324, mixing damper 318 may be operated by actuator 326, and outside air damper 320 may be operated by actuator 328. Actuators 324-328 may communicate with an AHU controller 330 via a communications link 332. Actuators 324-328 may receive control signals from AHU controller 330 and may provide feedback signals to AHU controller 330. Feedback signals may include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that may be collected, stored, or used by actuators 324-328. AHU controller 330 may be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 may be configured to force supply air 310 through cooling coil 334 and/or heating coil 336 and provide supply air 310 to building zone 306. AHU controller 330 may communicate with fan 338 via communications link 340 to control a flow rate of supply air 310. In some embodiments, AHU controller 330 controls an amount of heating or cooling applied to supply air 310 by modulating a speed of fan 338.

Cooling coil 334 may receive a chilled fluid from waterside system 200 (e.g., from cold water loop 216) via piping 342 and may return the chilled fluid to waterside system 200 via piping 344. Valve 346 may be positioned along piping 342 or piping 344 to control a flow rate of the chilled fluid through cooling coil 334. In some embodiments, cooling coil 334 includes multiple stages of cooling coils that can be independently activated and deactivated (e.g., by AHU controller 330, by BMS controller 366, etc.) to modulate an amount of cooling applied to supply air 310.

Heating coil 336 may receive a heated fluid from waterside system 200(e.g., from hot water loop 214) via piping 348 and may return the heated fluid to waterside system 200 via piping 350. Valve 352 may be positioned along piping 348 or piping 350 to control a flow rate of the heated fluid through heating coil 336. In some embodiments, heating coil 336 includes multiple stages of heating coils that can be independently activated and deactivated (e.g., by AHU controller 330, by BMS controller 366, etc.) to modulate an amount of heating applied to supply air 310.

Each of valves 346 and 352 may be controlled by an actuator. For example, valve 346 may be controlled by actuator 354 and valve 352 may be controlled by actuator 356. Actuators 354-356 may communicate with AHU controller 330 via communications links 358-360. Actuators 354-356 may receive control signals from AHU controller 330 and may provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 may also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and may correlate with the amount of energy consumed to achieve a desired supply air temperature. AHU controller 330 may control the temperature of supply air 310 and/or building zone 306 by activating or deactivating coils 334-336, adjusting a speed of fan 338, or a combination of both.

Still referring to FIG. 3, airside system 300 is shown to include a building automation system (BMS) controller 366 and a client device 368. BMS controller 366 may include one or more computer systems (e.g., servers, supervisory controllers, subsystem controllers, etc.) that serve as system level controllers, application or data servers, head nodes, or master controllers for airside system 300, waterside system 200, HVAC system 100, and/or other controllable systems that serve building 10. BMS controller 366 may communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 may be separate (as shown in FIG. 3) or integrated. In an integrated implementation, AHU controller 330 may be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 may provide BMS controller 366 with temperature measurements from temperature sensors 362-364, equipment on/off states, equipment operating capacities, and/or any other information that can be used by BMS controller 366 to monitor or control a variable state or condition within building zone 306.

Client device 368 may include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 may be a computer workstation, a client terminal, a remote or local interface, or any other type of user interface device. Client device 368 may be a stationary terminal or a mobile device. For example, client device 368 may be a desktop computer, a computer server with a user interface, a laptop computer, a tablet, a smartphone, a PDA, or any other type of mobile or non-mobile device. Client device 368 may communicate with BMS controller 366 and/or AHU controller 330 via communications link 372.

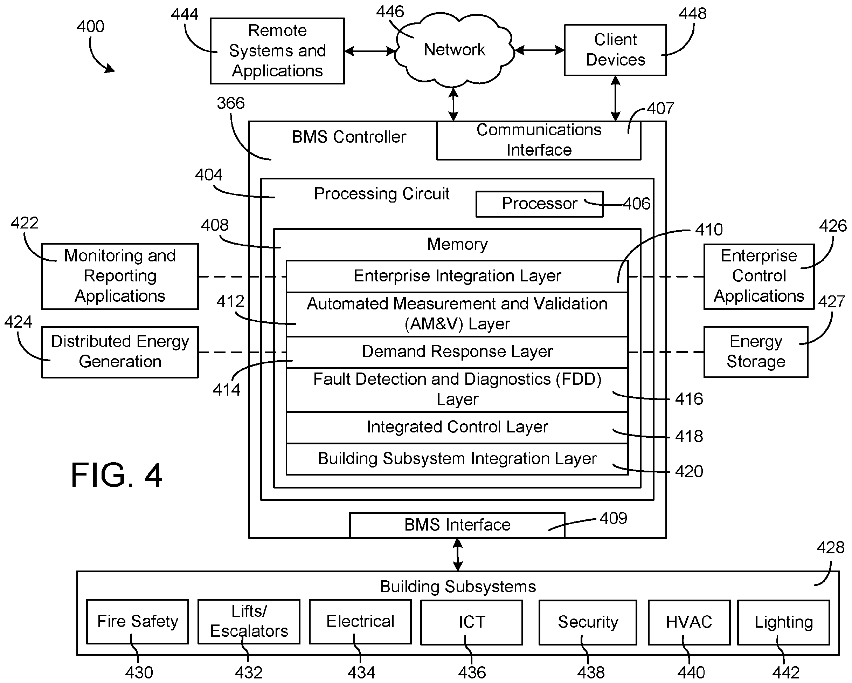

Referring now to FIG. 4, a block diagram of a building automation system (BMS) 400 is shown, according to some embodiments. BMS 400 may be implemented in building 10 to automatically monitor and control various building functions. BMS 400 is shown to include BMS controller 366 and a plurality of building subsystems 428. Building subsystems 428 are shown to include a building electrical subsystem 434, an information communication technology (ICT) subsystem 436, a security subsystem 438, a HVAC subsystem 440, a lighting subsystem 442, a lift/escalators subsystem 432, and a fire safety subsystem 430. In various embodiments, building subsystems 428 can include fewer, additional, or alternative subsystems. For example, building subsystems 428 may also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2-3.

Each of building subsystems 428 may include any number of devices, controllers, and connections for completing its individual functions and control activities. HVAC subsystem 440 may include many of the same components as HVAC system 100, as described with reference to FIGS. 1-3. For example, HVAC subsystem 440 may include a chiller, a boiler, any number of air handling units, economizers, field controllers, supervisory controllers, actuators, temperature sensors, and other devices for controlling the temperature, humidity, airflow, or other variable conditions within building 10. Lighting subsystem 442 may include any number of light fixtures, ballasts, lighting sensors, dimmers, or other devices configured to controllably adjust the amount of light provided to a building space. Security subsystem 438 may include occupancy sensors, video surveillance cameras, digital video recorders, video processing servers, intrusion detection devices, access control devices and servers, or other security-related devices.

Still referring to FIG. 4, BMS controller 366 is shown to include a communications interface 407 and a BMS interface 409. Interface 407 may facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Interface 407 may also facilitate communications between BMS controller 366 and client devices 448. BMS interface 409 may facilitate communications between BMS controller 366 and building subsystems 428 (e.g., HVAC, lighting security, lifts, power distribution, business, etc.).

Interfaces 407, 409 can be or include wired or wireless communications interfaces (e.g., jacks, antennas, transmitters, receivers, transceivers, wire terminals, etc.) for conducting data communications with building subsystems 428 or other external systems or devices. In various embodiments, communications via interfaces 407, 409 may be direct (e.g., local wired or wireless communications) or via a communications network 446 (e.g., a WAN, the Internet, a cellular network, etc.). For example, interfaces 407, 409 can include an Ethernet card and port for sending and receiving data via an Ethernet-based communications link or network. In another example, interfaces 407, 409 can include a WiFi transceiver for communicating via a wireless communications network. In another example, one or both of interfaces 407, 409 may include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 may be communicably connected to BMS interface 409 and/or communications interface 407 such that processing circuit 404 and the various components thereof can send and receive data via interfaces 407, 409. Processor 406 can be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. Memory 408 may be or include volatile memory or non-volatile memory. Memory 408 may include database components, object code components, script components, or any other type of information structure for supporting the various activities and information structures described in the present disclosure. According to an exemplary embodiment, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments BMS controller 366 may be distributed across multiple servers or computers (e.g., that can exist in distributed locations). Further, while FIG. 4 shows applications 422 and 426 as existing outside of BMS controller 366, in some embodiments, applications 422 and 426 may be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 may be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general functions performed by each of layers 410-420 in BMS 400.

Enterprise integration layer 410 may be configured to serve clients or local applications with information and services to support a variety of enterprise-level applications. For example, enterprise control applications 426 may be configured to provide subsystem-spanning control to a graphical user interface (GUI) or to any number of enterprise-level business applications (e.g., accounting systems, user identification systems, etc.). Enterprise control applications 426 may also or alternatively be configured to provide configuration GUIs for configuring BMS controller 366. In yet other embodiments, enterprise control applications 426 can work with layers 410-420 to optimize building performance (e.g., efficiency, energy use, comfort, or safety) based on inputs received at interface 407 and/or BMS interface 409.

Building subsystem integration layer 420 may be configured to manage communications between BMS controller 366 and building subsystems 428. For example, building subsystem integration layer 420 may receive sensor data and input signals from building subsystems 428 and provide output data and control signals to building subsystems 428. Building subsystem integration layer 420 may also be configured to manage communications between building subsystems 428. Building subsystem integration layer 420 translate communications (e.g., sensor data, input signals, output signals, etc.) across a plurality of multi-vendor/multi-protocol systems.

Demand response layer 414 may be configured to optimize resource usage (e.g., electricity use, natural gas use, water use, etc.) and/or the monetary cost of such resource usage in response to satisfy the demand of building 10. The optimization may be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 may receive inputs from other layers of BMS controller 366 (e.g., building subsystem integration layer 420, integrated control layer 418, etc.). The inputs received from other layers may include environmental or sensor inputs such as temperature, carbon dioxide levels, relative humidity levels, air quality sensor outputs, occupancy sensor outputs, room schedules, and the like. The inputs may also include inputs such as electrical use (e.g., expressed in kWh), thermal load measurements, pricing information, projected pricing, smoothed pricing, curtailment signals from utilities, and the like.

According to an exemplary embodiment, demand response layer 414 includes control logic for responding to the data and signals it receives. These responses can include communicating with the control algorithms in integrated control layer 418, changing control strategies, changing setpoints, or activating/deactivating building equipment or subsystems in a controlled manner. Demand response layer 414 may also include control logic configured to determine when to utilize stored energy. For example, demand response layer 414 may determine to begin using energy from energy storage 427 just prior to the beginning of a peak use hour.

In some embodiments, demand response layer 414 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 414 uses equipment models to determine an optimal set of control actions. The equipment models may include, for example, thermodynamic models describing the inputs, outputs, and/or functions performed by various sets of building equipment. Equipment models may represent collections of building equipment (e.g., subplants, chiller arrays, etc.) or individual devices (e.g., individual chillers, heaters, pumps, etc.).

Demand response layer 414 may further include or draw upon one or more demand response policy definitions (e.g., databases, XML files, etc.). The policy definitions may be edited or adjusted by a user (e.g., via a graphical user interface) so that the control actions initiated in response to demand inputs may be tailored for the user's application, desired comfort level, particular building equipment, or based on other concerns. For example, the demand response policy definitions can specify which equipment may be turned on or off in response to particular demand inputs, how long a system or piece of equipment should be turned off, what setpoints can be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 418 may be configured to use the data input or output of building subsystem integration layer 420 and/or demand response later 414 to make control decisions. Due to the subsystem integration provided by building subsystem integration layer 420, integrated control layer 418 can integrate control activities of the subsystems 428 such that the subsystems 428 behave as a single integrated super-system. In an exemplary embodiment, integrated control layer 418 includes control logic that uses inputs and outputs from a plurality of building subsystems to provide greater comfort and energy savings relative to the comfort and energy savings that separate subsystems could provide alone. For example, integrated control layer 418 may be configured to use an input from a first subsystem to make an energy-saving control decision for a second subsystem. Results of these decisions can be communicated back to building subsystem integration layer 420.

Integrated control layer 418 is shown to be logically below demand response layer 414. Integrated control layer 418 may be configured to enhance the effectiveness of demand response layer 414 by enabling building subsystems 428 and their respective control loops to be controlled in coordination with demand response layer 414. This configuration may advantageously reduce disruptive demand response behavior relative to conventional systems. For example, integrated control layer 418 may be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller. Integrated control layer 418 may be configured to provide feedback to demand response layer 414 so that demand response layer 414 checks that constraints (e.g., temperature, lighting levels, etc.) are properly maintained even while demanded load shedding is in progress. The constraints may also include setpoint or sensed boundaries relating to safety, equipment operating limits and performance, comfort, fire codes, electrical codes, energy codes, and the like. Integrated control layer 418 is also logically below fault detection and diagnostics layer 416 and automated measurement and validation layer 412. Integrated control layer 418 may be configured to provide calculated inputs (e.g., aggregations) to these higher levels based on outputs from more than one building subsystem.

Automated measurement and validation (AM&V) layer 412 may be configured to verify that control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 may be based on building system energy models and/or equipment models for individual BMS devices or subsystems. For example, AM&V layer 412 may compare a model-predicted output with an actual output from building subsystems 428 to determine an accuracy of the model.

Fault detection and diagnostics (FDD) layer 416 may be configured to provide on-going fault detection for building subsystems 428, building subsystem devices (i.e., building equipment), and control algorithms used by demand response layer 414 and integrated control layer 418. FDD layer 416 may receive data inputs from integrated control layer 418, directly from one or more building subsystems or devices, or from another data source. FDD layer 416 may automatically diagnose and respond to detected faults. The responses to detected or diagnosed faults may include providing an alert message to a user, a maintenance scheduling system, or a control algorithm configured to attempt to repair the fault or to work-around the fault.

FDD layer 416 may be configured to output a specific identification of the faulty component or cause of the fault (e.g., loose damper linkage) using detailed subsystem inputs available at building subsystem integration layer 420. In other exemplary embodiments, FDD layer 416 is configured to provide "fault" events to integrated control layer 418 which executes control strategies and policies in response to the received fault events. According to an exemplary embodiment, FDD layer 416 (or a policy executed by an integrated control engine or business rules engine) may shut-down systems or direct control activities around faulty devices or systems to reduce energy waste, extend equipment life, or assure proper control response.

FDD layer 416 may be configured to store or access a variety of different system data stores (or data points for live data). FDD layer 416 may use some content of the data stores to identify faults at the equipment level (e.g., specific chiller, specific AHU, specific terminal unit, etc.) and other content to identify faults at component or subsystem levels. For example, building subsystems 428 may generate temporal (i.e., time-series) data indicating the performance of BMS 400 and the various components thereof. The data generated by building subsystems 428 may include measured or calculated values that exhibit statistical characteristics and provide information about how the corresponding system or process (e.g., a temperature control process, a flow control process, etc.) is performing in terms of error from its setpoint. These processes can be examined by FDD layer 416 to expose when the system begins to degrade in performance and alert a user to repair the fault before it becomes more severe.

### Fault Determination and Categorization System

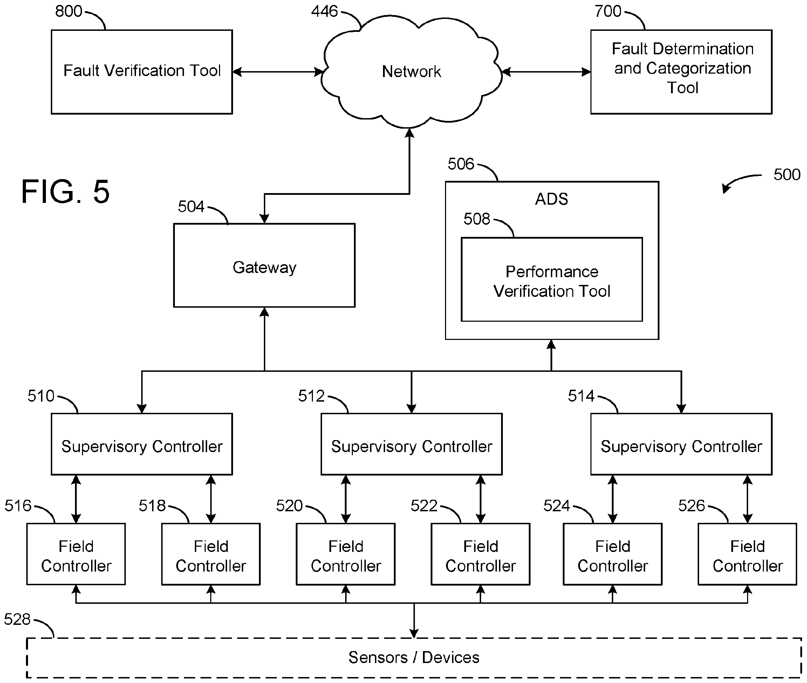

Referring now to FIG. 5, a block diagram of a system 500 for monitoring various components of a BMS and determining and categorizing faults and verifying that the fault has been resolved is shown, according to some embodiments. System 500 is shown to include a fault determination and categorization tool 600, a fault verification tool 800, and a gateway 504, all communicably coupled to network 446. While shown as singular components each of fault determination and categorization tool 600, fault verification tool 800, and gateway 504 may also be implemented across multiple devices (e.g., via a distributed computing architecture).

Fault determination and categorization tool 600, fault verification tool 800, and gateway 504 generally include a processor and memory for storing and executing instructions. Said memory may include one or more devices (e.g., RAM, ROM, Flash memory, hard disk storage, etc.) for storing data and/or computer code for completing or facilitating the various processes, layers and modules described in the present disclosure. The memory may be or include volatile memory or non-volatile memory and may include database components, object code components, script components, or any other type of information structure for supporting the various activities and information structures described in the present disclosure.

At a high level, fault determination and categorization tool 600, fault verification tool 800, and gateway 504 may transmit and receive (i.e., communicate) data, including various operating data and/or parameters, via network 446. For example, fault determination and categorization tool 600 may receive data from fault verification tool 800 and gateway 504, and/or may transmit data to fault verification tool 800 and gateway 504. Network 446 may be any type of communications network, as described above, such as a WAN, LAN, the Internet, a cellular network, etc. Accordingly, each of fault determination and categorization tool 600, fault verification tool 800, and gateway 504 may include a network interface for wired and/or wireless communications. For example, fault determination and categorization tool 600 may include a wireless network interface (e.g., a WiFi transmitter/receiver) and site analytics tool may include an Ethernet interface. It will be appreciated that any combination of wired and/or wireless communications may be utilized.

As shown, gateway 504 can be configured to receive operating data from a plurality of supervisory controllers 510-514. In particular, in some embodiments, gateway 504 may receive and/or collect operating data via an open communications protocol, such as BACnet, from any of supervisory controllers 510-514. Supervisory controllers 510-514 may be any high-level controller of a BMS, such as network automation engines (NAEs), network integration engines (NIEs), or network control engines (NCEs). In one example, each of building subsystems 426, described above, may include a supervisory controller. In some embodiments, each of supervisory controllers 510-514 can include a processor and memory for performing one or more functions, such as receiving, processing, and/or transmitting data, and/or providing control signals to various lower-level field controllers 516-526. In some embodiments, supervisory controllers 510-514 may be similar to the BMS controller 366 and may include some or all of the features and functions of the BMS controller 366 described above. Additionally, it will be appreciated that system 500 may include any number of supervisory controllers.

Field controllers 516-526 can include any controllers in a BMS that are at a lower level (e.g., hierarchically) than supervisory controllers 510-514. For example, each of field controllers 516-526 may be a controller for a particular device or space in a building. Supervisory controllers 510-514 may receive operating data from field controllers 516-526 relating to various sensors and/or devices 528 monitored and/or controlled by field controllers 516-526. Sensors/device 528 can include any sensors or field devices (i.e., edge devices) included in a BMS, such as any of the sensors or equipment described above with respect to FIGS. 1-4. As an example, sensors/devices 528 can include sensors for measuring various equipment or space parameters (e.g., temperature, pressure, speed, etc.) and devices such as chillers, AHUs, valves, lights, fans, etc.

In some embodiments, field controllers 516-526 collect operating data from sensors/devices 528 during BMS operations, and also provide control signals to sensors/devices 528 based on the operating data, and/or based on other inputs. For example, a field controller for a chiller may collect information such as pump speed, input/output pressure and temperature, etc., Supervisory controllers 510-514 can subsequently collect said operating data, and other information such a field controller parameters or settings, from one or more of field controllers 516-526. It will be appreciated that, as described herein, operating data may be collected and/or transmitted on demand, at regular intervals, instantly, or at any other appropriate interval.

To continue the previous example, a field controller (e.g., field controller 516) for a chiller can collect various operating data in real-time, as the chiller operates. This operating data may then be collected, in real-time or at a regular interval (e.g., every five minutes, every hour, etc.), by a corresponding supervisory controller (e.g., supervisory controller 510, which may be a supervisory controller for an HVAC subsystem such as HVAC subsystem 440). A portion of the operating data may be formatted in accordance with an open communications protocol (e.g., BACnet), as discussed above, and accordingly may be collected and transmitted (e.g., to fault determination and categorization tool 600 and/or fault verification tool 800) by gateway 504.

In some embodiments, a portion of the operating data collected by supervisory controllers 510-514 may be in a proprietary format that cannot be received, processed, and/or transmitted by gateway 504. In other words, certain operating data may be collected from proprietary equipment or sensors (e.g., sensors/devices 528) in a format other that an open communication protocol. Additionally, information such as parameters and/or settings (e.g., setpoints, schedules, etc.) of field controllers 516-526 and/or supervisory controllers 510-514 may not be accessible or receivable by gateway 504. In this case, an application data server (ADS) 506 may collect a portion of the operating data for further analysis and/or processing, before being transmitted to fault determination and categorization tool 600 and/or fault verification tool 800.

ADS 506 may be a computing device such as a server or computer that manages the collection of large amounts of operating data from the various components of a BMS. In this case, ADS 506 is configured to collect operating data and other information from supervisory controllers 510-514. In particular, ADS 506 can collect data in both an open communication protocol, and any other formats (e.g., a proprietary format). Accordingly, ADS 506 can process and/or reformat the data that cannot be handled by gateway 504. ADS 506 may also or host a performance verification tool (PVT) 508, which processes and/or reformats the collected operating data. In particular, PVT 508 can obtain and analyze the operating data, and can generate a report or can convert the operating data for transmission to fault determination and categorization tool 600 and/or fault verification tool 800 by gateway 504. In some embodiments, PVT 508 is an application or a program that is stored on memory of ADS 506 and executed by a processor of ADS 506.

In some embodiments, PVT 508 is continuously executed, thereby processing the operating data in real-time. In other embodiments, PVT 508 is executed at a regular interval (e.g., every day) to batch process the operating data. In such embodiments, ADS 506 may collect the operating data between executions of the PVT 508, and PVT 508 may generate a report based on the collected data. This report and/or the processed operating data may be transmitted via gateway 504 to fault determination and categorization tool 600 and/or fault verification tool 800.

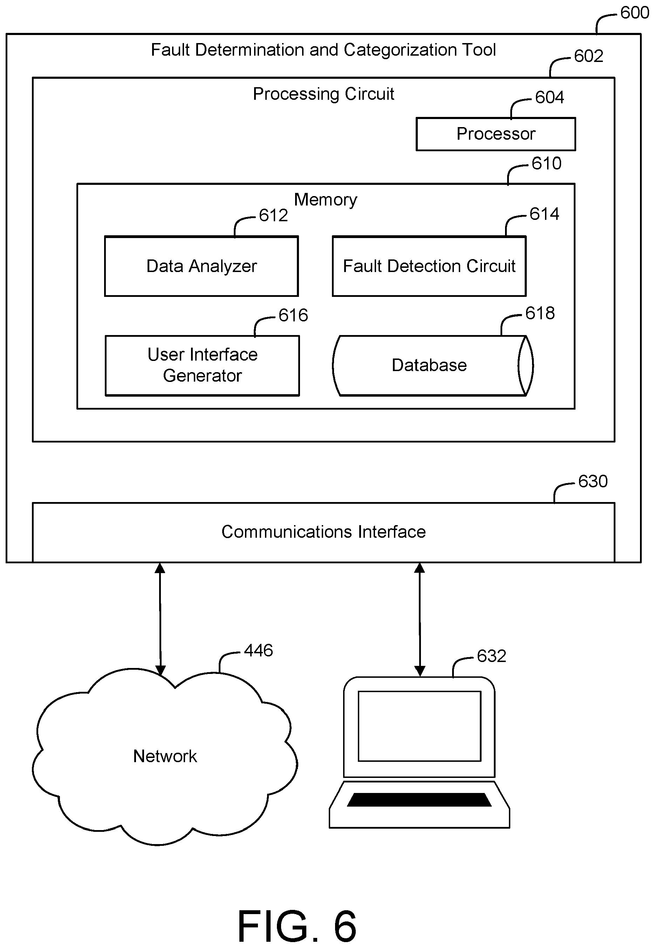

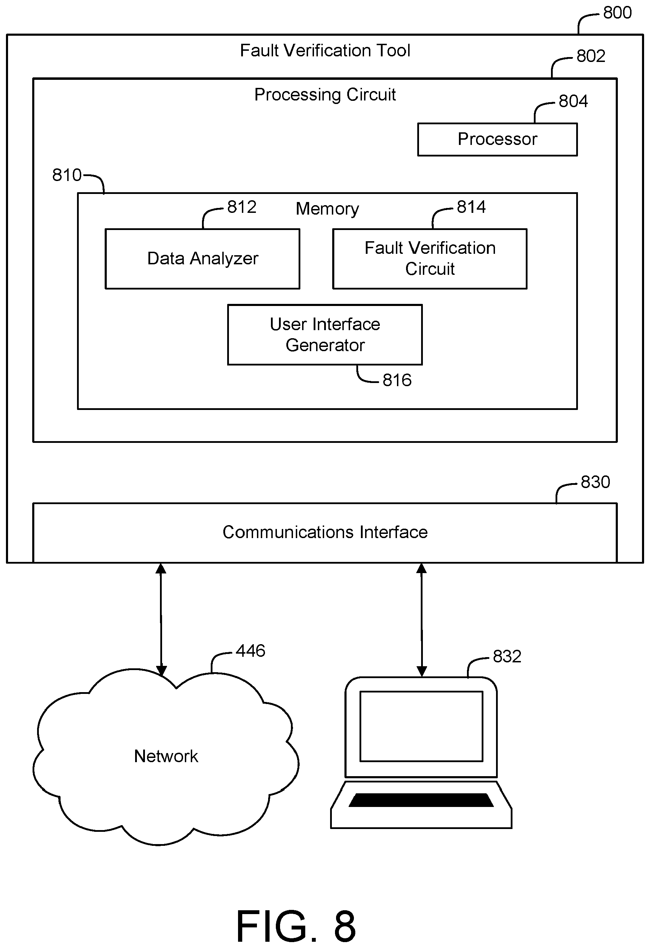

Fault determination and categorization tool 600 is configured to receive data related to one or more faults from supervisory controllers 510. As explained above, supervisory controllers 510-514 may each include a fault detection layer similar to FDD 416 which is configured to provide on-going fault detection for building subsystems 428, building subsystem devices (i.e., building equipment). The fault detection layer may receive data inputs from field controllers 516-526 that it may then process the data to detect a fault. This data and the detected fault may then be communicated to fault determination and categorization tool 600 which determines that a fault has occurred and categorizes the fault as either a "remote fix" fault or an "on-site fix" fault. Fault determination and categorization tool 600 is described in more detail below with respect to FIG. 6. Fault verification tool 800 is configured to receive operating data and reports from the ADS and/or supervisory controllers 510-514 directly and utilize the operating data and reports to verify whether faults have been repaired or not. As explained above, supervisory controllers 510-514 may each include a fault detection layer similar to FDD 416 which is configured to provide on-going fault detection for building subsystems 428, building subsystem devices (i.e., building equipment). The fault detection layer may receive data inputs from field controllers 516-526 that it may then process to detect a fault. This data and the detected fault may then be communicated to fault verification tool 800. Fault verification tool 800 is described in more detail below with respect to FIG. 8. In some embodiments, site analytics tool 502 may also generate user interfaces for presenting for presenting fault detection and verification information in the form of graphs, charts, etc.

Referring now to FIG. 6, a detailed block diagram of fault determination and categorization tool 600 is shown, according to some embodiments. As briefly described above, fault determination and categorization tool 600 may receive data from ADS 506 and/or supervisory controllers 510-514 through gateway 504, and may determine and categorize a building fault based on the received data. In particular, fault determination and categorization tool 600 may receive operating data or parameters relating to one or more building subsystems 428 from sensors/devices 528. Supervisory controllers 510-512 may then detect one or more faults within building 100 based on this data and send the data and the fault detection information to fault determination and categorization tool 600 for further processing of the data and categorization of the faults.

Fault determination and categorization tool 600 is shown to include a processing circuit 602, which includes a processor 604 and a memory 610. It will be appreciated that these components can be implemented using a variety of different types and quantities of processors and memory. For example, processor 604 can be a general purpose processor, an application specific integrated circuit (ASIC), one or more field programmable gate arrays (FPGAs), a group of processing components, or other suitable electronic processing components. Processor 604 can be communicatively coupled to memory 610. While processing circuit 602 is shown as including one processor 604 and one memory 610, it should be understood that, as discussed herein, a processing circuit and/or memory may be implemented using multiple processors and/or memories in various embodiments. All such implementations are contemplated within the scope of the present disclosure.

Memory 610 can include one or more devices (e.g., memory units, memory devices, storage devices, etc.) for storing data and/or computer code for completing and/or facilitating the various processes described in the present disclosure. Memory 610 can include random access memory (RAM), read-only memory (ROM), hard drive storage, temporary storage, non-volatile memory, flash memory, optical memory, or any other suitable memory for storing software objects and/or computer instructions. Memory 610 can include database components, object code components, script components, or any other type of information structure for supporting the various activities and information structures described in the present disclosure. Memory 610 can be communicably connected to processor 604 via processing circuit 602 and can include computer code for executing (e.g., by processor 604) one or more processes described herein.

Memory 610 is shown to include a data analyzer 612, configured to processes a wide variety of operating data from supervisory controllers 510-514 and/or gateway 504. In particular, fault determination and categorization tool 600 may receive operating data from site supervisory controllers 510-514 and/or gateway 504, and data analyzer 612 may interpret, format, store, and/or retrieve the operating data. In some embodiments, data analyzer 612 requests (i.e., queries) particular operating data needed for categorizing a fault, as discussed in greater detail below. In such embodiments, data analyzer 612 may transmit queries to any of supervisory controllers 510-514, gateway 504 and/or ADS 506 and may subsequently receive requested information.

Memory 610 is also shown to include a fault categorization circuit 614, configured to categorize a fault as detected by the supervisory controller based on operating data and/or one or more machine learning models. Fault categorization circuit 614 may receive any operating data necessary for categorizing faults from data analyzer 612, and may categorize the faults on demand, or at regular intervals. In some embodiments, fault categorization circuit 614 categorizes faults for each building subsystem 428 or for various subsets the building subsystems 528. For example, in some embodiments, only faults related to electrical subsystem 434 may be determined and categorized while in other embodiments faults related to all the subsystems 428 may be determined and categorized.

In some embodiments, fault determination and categorization tool 600 receives operating data in real-time, or in near real-time (e.g., instantaneously, within a few seconds, within a few minutes, etc.). Accordingly, the faults may be determined and categorized continuously or at regular intervals. For example, fault determination and categorization tool 600 may categorize all the faults detected in a building within a 24 hour period at the end of the 24 hour period. As another example, fault determination and categorization 600 may categorize the faults as they are detected in real time. Accordingly, the fault categorizations can be compared over time, to update the machine learning models used to categorize the faults.

In some embodiments, fault categorization circuit 614 may analyze the operating data according to a plurality of rules and categorize the faults based the plurality of rules. More specifically, the plurality of rules may make up a fault categorization model which may be stored in the fault categorization circuit 614. The fault categorization model may be configured to receive the operating data of the building and detected faults as inputs to the model. The fault categorization model may then analyze the operating data and the detected faults based on the plurality of rules which make the fault categorization model and then outputs a categorization for each fault based on the fault categorization model. In some embodiments, the fault categorization model may be a machine learning model and/or artificial intelligence model (e.g., a neural network, a random forest, a support vector machine, etc.). The fault categorization model may be trained to better categorize faults based on the operating data received and previously categorization of faults. In some embodiments, the fault categorization model may be trained based on user feedback received from a user (e.g., building technicians, building administrators, building managers, etc.). For example, the fault categorization model may receive an AHU fault and operating data related to an AHU fault and may initially categorize the fault as a "remote fix" fault. The technician may attempt to repair the fault remotely and realize that the fault is not repairable remotely. The technician may then provide this feedback to fault determination and categorization tool 600. The feedback received from the technician may be used to train the fault categorization model so that model may correctly categorize the AHU fault as an "on-site fix" fault thus making the model more accurate.

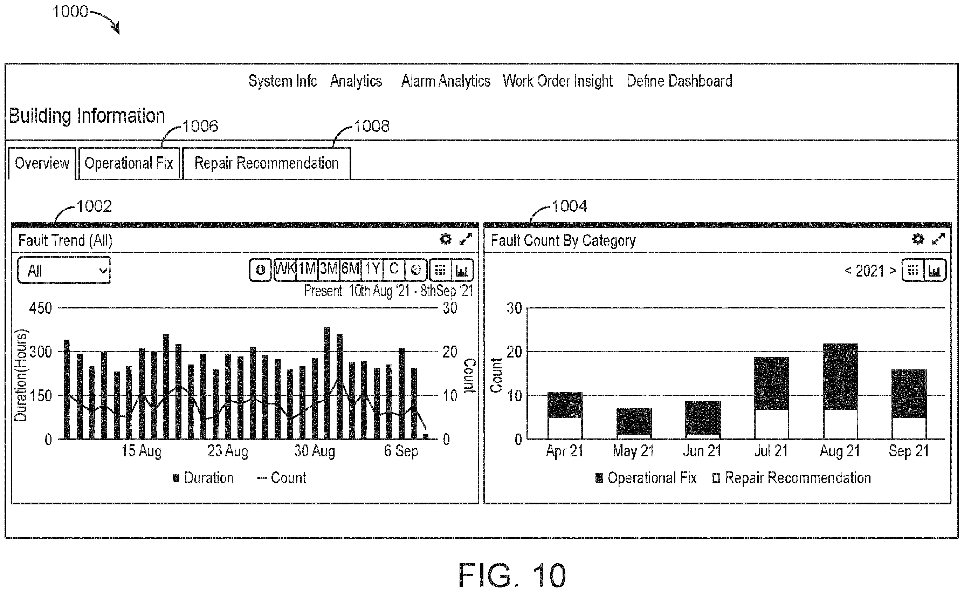

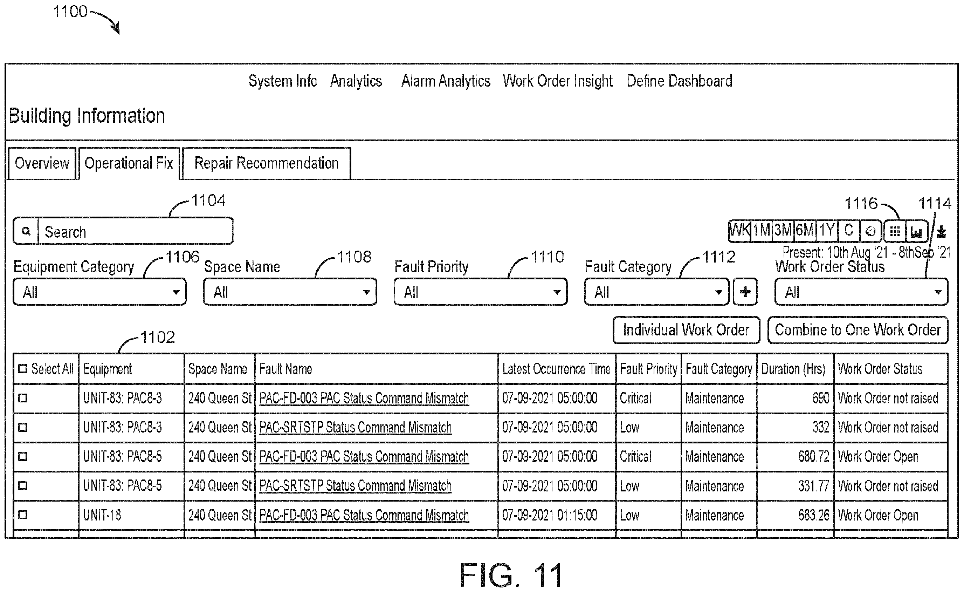

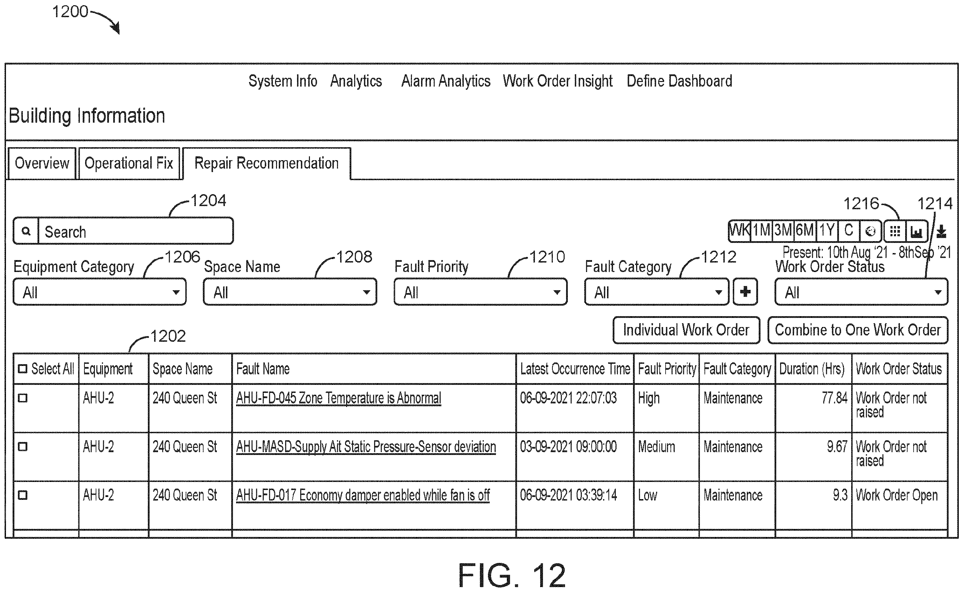

Memory 610 further includes a user interface (UI) generator 616. UI generator 616 may be configured to generate graphical interfaces for fault categorization information. For example, UI generator 616 may generate interfaces that present graphs, charts, animations, etc. that indicate a categorization for a fault and diagnostic information for a fault. For example, UI generator 616 may generate interfaces 1000, 1100, and 1200, shown in FIGS. 10, 11, and 12 respectively, which are configured to display the fault categorization information. More specifically, interface 1000 displays an overview of the faults determined and categorized by fault determination and categorization tool 600. The interface 1000 may include a fault trend graph 1002 which is configured to display amount of faults determined and their duration in hours over a period of time (e.g., days, weeks, months, years, etc.). The interface 1000 may include a fault categorization chart 1004 which is configured to display the categorization of faults as either a "remote fix" fault (e.g., "operation fix") or an "on-site fix" fault (e.g., "repair recommendation"). Interfaces 1100 and 1200 may be accessed by clicking on the "operation fix" tab 1006 or the "repair recommendation" tab 1008. For example, if the user would like more information about the faults categorized as "remote fix", they may interact with the "operational fix tab 1006" which takes them to interface 1100. As another example, if the user would like more information about the faults categorized as "on-site fix", they may interact with the "repair recommendation" tab 1008 which takes them to interface 1200. Interface 1100 provides a list 1102 of faults categorized as "remote fix" faults while interface 1200 provides a list of faults categorized as "on-site fix". A user may interact with interface portions 1104-1116 to organize, sort, or otherwise rearrange the information displayed in list 1102. Similarly, a user may interact with user interface portions 1204-1216 to organize, sort, or otherwise rearrange the information displayed in list 1202. In some embodiments, UI generator 616 may also generate and present interfaces that indicate actions that may be taken by a user (e.g., technician, building manager, building administrator, etc.) to resolve the issue.

The various user interfaces generated by UI generator 616 may be presented via a user device 632. User device 632 may be any device having an interface for presenting data to a user. For example, user device 632 may include at least a screen for presenting interfaces, and an input device for receiving user inputs. In some embodiments, user device 632 is a desktop or laptop computer, a smartphone, a tablet, a smart watch, etc. User device 632 may be communicably coupled to fault determination and categorization tool 600 via a communications interface 630, which also provides an interface for fault determination and categorization tool 600 to transmit and receive data via network 446.

Memory 610 also includes a database 618, which can be configured to store, maintain, and/or retrieve any type of information that is relevant to the determination and categorization of the faults. For example, database 618 may store operating data received from any of the components of system 500, any of the building subsystems 428, the fault categorization model, and/or previous fault categorizations. In this regard, the categorization of faults may be analyzed (e.g., via a user interface) over time, to identify trends related to categorize faults. For example, the trends may indicate an increase or decrease in faults being categorized in a certain category (e.g., an increase in "on-site fix" faults or a decrease in "remote fix" faults).

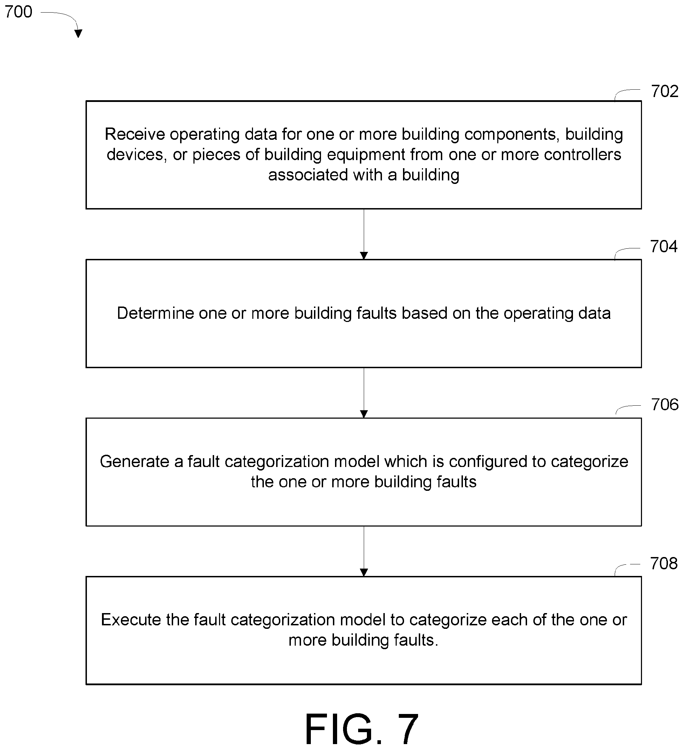

Referring now to FIG. 7, a process 700 for determining and categorizing faults for the building 100 is shown, according to some embodiments. Process 700 may be implemented by system 500, for example, and at least in part by fault determination and categorization tool 600. As described above, faults may be determined and categorized for one or more facilities (i.e., sites, buildings, etc.), and may prevent unnecessary maintenance site visits by categorizing the faults as "remote fix" faults and "on-site fix" faults before any site visits are made. It will be appreciated that certain steps of process 700 may be optional and, in some embodiments, process 700 may be implemented using less than all of the steps.

At step 702, fault determination and characterization tool 600 receives operating data for one or more building components, building devices, and/or pieces of building equipment from one or more controllers associated with the building 100. The building components, building devices, and/or pieces of building equipment may be any of the building components or devices described above with respect to FIGS. 1-4. For example, the building components may one or more of the building subsystem 428 or the building devices may be any components associated the building subsystems. The one or more controllers may be supervisory controllers 510-514 and/or field controllers 516-526 as described above with respect to FIG. 5. The operating data may include fault information (e.g., when the fault occurred, diagnostic information about the fault, duration of the fault, etc.) about faults related to one or more building components and/or building equipment.

At step 704, fault determination and characterization tool 600 determines one or more building faults based on the operating data received at step 702. Building faults may refer to any faults related pieces of building equipment, building subsystems, building components, and building sensors/devices. More specifically, fault determination and characterization tool 600 receives fault detection data from supervisory controllers 510-514. As mentioned above, supervisory controllers 510-514 may each include a fault detection layer which is configured to provide on-going fault detection for building subsystems 428, building subsystem devices (i.e., building equipment). The fault detection layer may receive data inputs from field controllers 516-526 that supervisory controllers 510-514 may then process to detect a fault. The fault information and the detected fault may then be communicated to fault determination and categorization tool 600 which determines that a fault has occurred.

At step 706, fault determination and characterization tool 600 generates a fault characterization model which is configured to categorize one or more building faults. The fault characterization model may be a machine learning model (e.g., a neural network, random forest, a support vector machine, etc.). In some embodiments, the fault characterization model may be trained using training data which is configured to make the fault characterization model more accurate. The training data may include user feedback. For example, the software version for supervisory controller 510 may not be up to date. In this case, the fault detection layer in supervisory controller 510 may then determine that a "supervisory controller fault" based on the software version being out of date. The fault characterization model may initially categorize this fault as an "on-site fix" fault and a technician may visit the site of supervisory controller 510 to repair the "supervisory controller fault". After resolving the fault, the technician may realize that the "supervisory controller fault" could be have been repaired remotely and may enter this information as feedback to fault determination and categorization tool 600. The feedback entered by the technician may be used as training data to make fault characterization model more accurate so that future "supervisory controller faults" for outdated software may be categorized as a "remote fix" fault. The training data may include updated current operating data which may be gathered automatically from one or more pieces of building equipment, building components, building devices, etc. For example, supervisory controllers 510-514 may initially detect and categorize a fault as remote-fix. The supervisory controllers 510-514 may then utilize the updated current operating data to detect whether the fault has been resolved, how the fault was resolved (e.g., was it remotely fixed or on-site maintenance?) and whether the fault was initially correctly categorized as either remote fix or on-site fix.

At step 708, fault determination and categorization tool 600 executes the fault categorization model and obtains an output that categorizes the faults determined at step 704. In some embodiments, the faults may be categorized by the fault characterization model as either "on-site fix" faults or "remote fix" faults. As described above, a "remote fix" fault may be described as a building fault that may be resolved remotely without a technician being required to visit site of the fault. On the other hand, an "on-site fix" fault may be described as a building fault that requires an "on-site" visit by a technician to be repaired. In other embodiments, the faults may be categorized into different categories (e.g., building equipment, duration, building location, building zone, severity, etc.).

At step 710, fault determination and categorization tool 600 displays the output of the fault categorization model through a user interface on a user device. More specifically, UI generator 616 may convert the output of the fault categorization model into a visual format that may be analyzed by a user (e.g., lists, charts, graphs, animations, etc.). For example, UI generator 616 may generate a user interface that indicates a categorization for a fault and diagnostic information for a fault such as shown in interfaces 1000, 1100, and 1200.

Referring now to FIG. 8, a detailed block diagram of fault verification tool 800 is shown, according to some embodiments. As briefly described above, fault verification tool 800 may receive data from ADS 506 and/or supervisory controllers 510-514 through gateway 504, and may verify that one or more building faults have been resolved. In particular, fault verification tool 800 may receive operating data or parameters relating to one or more building subsystems 428 from sensors/devices 528 and use this data to determine whether the building faults have been resolved.

Fault verification tool 800 is shown to include a processing circuit 802, which includes a processor 804 and a memory 810. It will be appreciated that these components can be implemented using a variety of different types and quantities of processors and memory. For example, processor 804 can be a general purpose processor, an application specific integrated circuit (ASIC), one or more field programmable gate arrays (FPGAs), a group of processing components, or other suitable electronic processing components. Processor 804 can be communicatively coupled to memory 810. While processing circuit 802 is shown as including one processor 804 and one memory 810, it should be understood that, as discussed herein, a processing circuit and/or memory may be implemented using multiple processors and/or memories in various embodiments. All such implementations are contemplated within the scope of the present disclosure.

Memory 810 can include one or more devices (e.g., memory units, memory devices, storage devices, etc.) for storing data and/or computer code for completing and/or facilitating the various processes described in the present disclosure. Memory 810 can include random access memory (RAM), read-only memory (ROM), hard drive storage, temporary storage, non-volatile memory, flash memory, optical memory, or any other suitable memory for storing software objects and/or computer instructions. Memory 810 can include database components, object code components, script components, or any other type of information structure for supporting the various activities and information structures described in the present disclosure. Memory 810 can be communicably connected to processor 804 via processing circuit 802 and can include computer code for executing (e.g., by processor 804) one or more processes described herein.

Memory 810 is shown to include a data analyzer 812, configured to processes a wide variety of operating data from supervisory controllers 510-514 and/or gateway 504. In particular, fault verification tool 800 may receive operating data from site supervisory controllers 510-514 and/or gateway 504, and data analyzer may interpret, format, store, and/or retrieve the operating data. In some embodiments, data analyzer 812 requests (i.e., queries) particular operating data needed for determining if a fault has been repaired or resolved, as discussed in greater detail below. In such embodiments, data analyzer 812 may transmit queries to any of supervisory controllers 510-514, gateway 504 and/or ADS 506 and may subsequently receive requested information.

Memory 810 is also shown to include a fault verification circuit 814, configured to verify that a fault has been resolved or repaired based on operating data and/or one or more machine learning models. Fault verification circuit 814 may receive any operating data necessary for verifying that faults have been resolved from data analyzer 812, and may verify that the faults have been resolved or repaired on demand, or at regular intervals.

In some embodiments, fault verification tool 800 receives operating data in real-time, or in near real-time (e.g., instantaneously, within a few seconds, within a few minutes, etc.). Accordingly, the faults as detected by supervisory controllers 510 may be analyzed based on the operating data, either continuously or at regular intervals, to determine whether the faults have been resolved or repaired. For example, fault verification tool 800 may verify whether the faults have been resolved or repaired on demand when a user requests a report or at regular hour intervals (e.g., every 12 hours, 24 hours, etc.). In some embodiments, fault verification tool 800 verifies different faults at different time intervals based on one or more rules for the fault. For example, faults that are considered severe or urgent may be continuously analyzed to determine whether they have been resolved. On the other hand, faults that are considered routine or non-urgent may only be analyzed on demand or at routine intervals of 24 hours. Fault verification tool 800 may also be configured to produce reports with fault repair information (site of fault, related building equipment, duration or fault, date and time when fault was resolved, etc.).

Memory 810 further includes a user interface (UI) generator 816. UI generator 816 may be configured to generate graphical interfaces for presenting the fault repair information to a user. For example, UI generator 816 may generate interfaces that present graphs, charts, animations, lists, etc. that display the fault repair information. For example, UI generator 816 may generate a user interface based on the fault repair information report created by fault verification circuit 814 so that the report may be displayed.

The various user interfaces generated by UI generator 816 may be presented via a user device 832. User device 832 may be any device having an interface for presenting data to a user. For example, user device 832 may include at least a screen for presenting interfaces, and an input device for receiving user inputs. In some embodiments, user device 832 is a desktop or laptop computer, a smartphone, a tablet, a smart watch, etc. User device 832 may be communicably coupled to fault verification tool 800 via a communications interface 830, which also provides an interface for fault verification tool 800 to transmit and receive data via network 446.

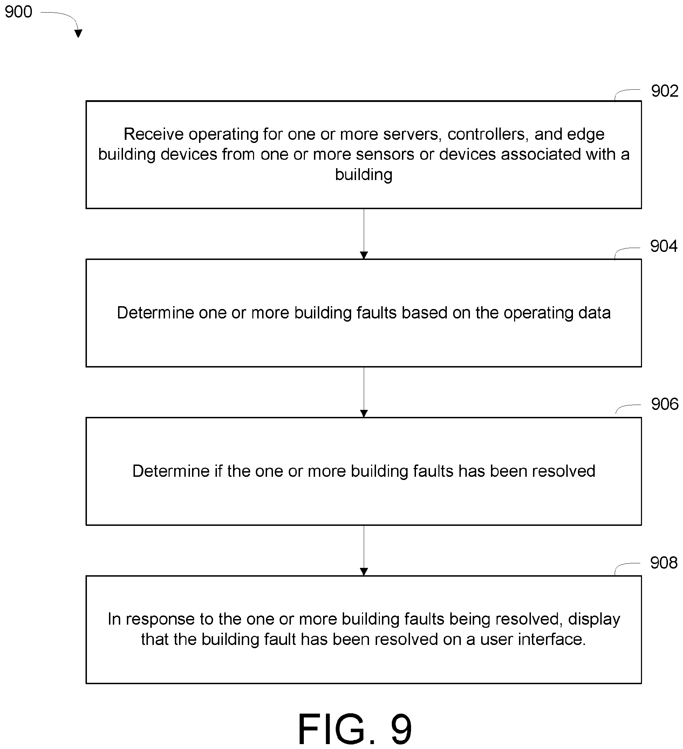

Referring now to FIG. 9, a process 900 for verifying that the faults of building 100 have been repaired and resolved is shown, according to some embodiments. Process 900 may be implemented by system 500, for example, and at least in part by fault verification tool 800. It will be appreciated that certain steps of process 900 may be optional and, in some embodiments, process 900 may be implemented using less than all of the steps.

At step 902, fault verification tool 800 receives operating data for one or more building components, building devices, and/or pieces of building equipment from one or more controllers associated with the building 100. The building components, building devices, and/or pieces of building equipment may be any of the building components or devices described above with respect to FIGS. 1-4. For example, the building components may one or more of the building subsystem 428 or the building devices may be any components associated the building subsystems. The one or more controllers may be supervisory controllers 510-514 and/or field controllers 516-526 as described above with respect to FIG. 5. The operating data may include historic and current fault information (e.g., when the fault occurred, diagnostic information about the fault, duration of the fault, etc.) about faults related to one or more building components and/or building equipment. Additionally, the operating data may information about the current operation of one or more building components and/or building equipment.

At step 904, fault verification tool 800 determines one or more building faults based on the operating data received at step 902. Building faults may refer to any faults related pieces of building equipment, building subsystems, building components, and building sensors/devices. More specifically, fault verification tool 800 receives fault detection data from supervisory controllers 510-514. As mentioned above, supervisory controllers 510-514 may each include a fault detection layer which is configured to provide on-going fault detection for building subsystems 428, building subsystem devices (i.e., building equipment). The fault detection layer may receive data inputs from field controllers 516-526 that supervisory controllers 510-514 may then process to detect a fault. The fault information and the detected fault may then be communicated to fault verification tool 800 which determines that a fault has occurred.

At step 906, fault verification tool 800 determines if the one or more building faults determined at step 904 has been repaired or resolved. In some embodiments, fault verification tool 800 may determine that the fault has been resolved based on feedback from one or more users (e.g., technicians, building administrators, building managers, etc.). For example, if a technician is tasked with repairing a fault, they may enter the results of their repairing efforts (e.g., successful repair of fault, partly successful repair of fault, failure to repair fault, etc.). The technician may then enter their feedback through user device 832 which may then be communicated to fault verification tool 800. Based on the technician feedback, fault verification tool 800 may be able to verify that the fault has been repaired and resolved. In other embodiments, fault verification tool 800 may determine that the fault has been resolved based on the current operating for one or more building components. For example, an "actuator 1 flow rate fault" may have been previously in step 904. Fault verification tool 800 may have since received updated current operating data for actuator 1 which demonstrates that the actuator fault has been resolved. In this case, fault verification tool 800 may determine that the "actuator 1 flow rate fault" has been resolved based on the updated current operating data. In some embodiments, fault verification tool 800 may require multi-factor verification to determine that a fault has been repaired or resolved. For example, fault verification tool 800 may need both the technician feedback and current operating data to verify that the fault has been repaired and resolved.

At step 908, fault verification tool 800 displays that the building fault has been resolved on a user interface on a user device in response to determining that the fault has been resolved. More specifically, UI generator 816 may display the results (e.g., whether the fault has been resolved or not) of fault verification tool 800 in a visual format that may be observed by a user (e.g., lists, charts, graphs, animations, etc.).

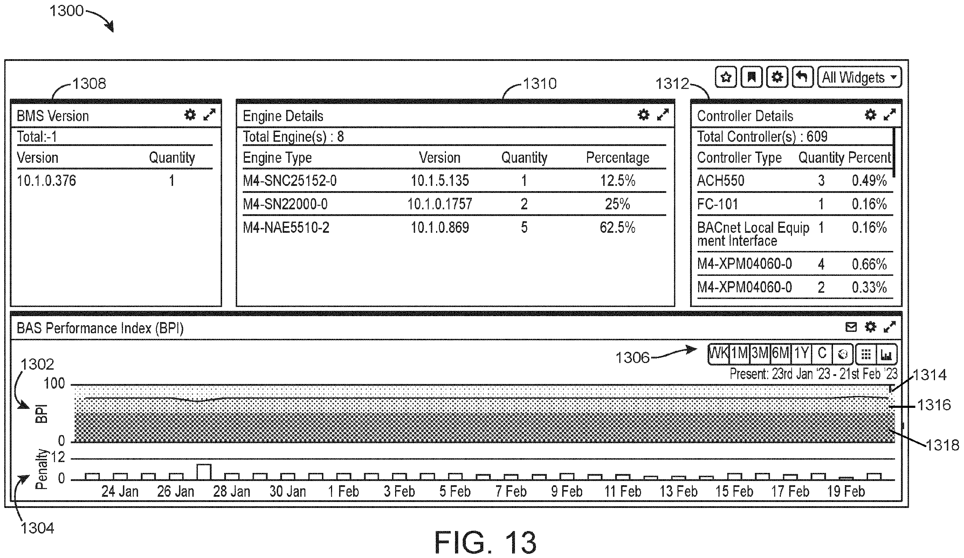

Referring now to FIG. 13, a user interface 1300 for graphically presenting a BMS performance index (BPI) of one or more BMSs is shown, according to some embodiments. In some embodiments, the fault determination and categorization tool 600 may be configured to calculate a BPI score for a building. A BPI may be a value indicative of the overall health and efficiency of a BMS. A BPI value can provide numerous insights to a user (e.g., a building manager, a facilities operator, etc.), allowing the user to quickly and easily determine whether the BMS is running as efficiently as possible. In particular, the fault determination and categorization tool 600 may be configured to receive operating data from a variety of BMS components, calculate a performance score for each of the variety of BMS components, and calculate an aggregate BPI for the BMS based on the various performance scores. Operating data can be obtained from computing devices (e.g., servers) of the BMS, supervisory and field controllers of the BMS, and from various lower-level (i.e., edge) BMS devices, including sensors, actuating devices, points, etc.

A number of different factors may impact the BPI for a particular BMS. In some embodiments, a number of parameters for each component of the BMS may be established, and operating data for each BMS components may be compared to these parameters to calculate performance scores for each component. For example, parameters such as a maximum average memory usage and an allowable temperature range may be defined for supervisory controllers of a BMS. Any controllers that to not meet these parameters (e.g., memory usage is too high) may incur a penalty score that reduces the performance score for the corresponding controller. Performance scores for all of the computing devices (e.g., servers), supervisory and field controllers, and edge devices in a BMS can be aggregated to generate the BPI.

In some embodiments, the BPI may be utilized to automatically generate recommendations for improving BMS performance. For example, it may be determined that out-of-date server software is negatively impacting BMS performance (e.g., lowering the BPI), so BPI tool may recommend (e.g., to a user) that the server software be updated. In some embodiments, the BPI may also be utilized to automatically schedule service or maintenance for various BMS components. For example, maintenance may automatically be scheduled for a stuck actuator device, which also may lower the BPI. Additionally, in some embodiments, the BPI may be presented via various user interfaces, to allow a user to quickly and intuitively view BMS performance and identify problem areas (e.g., or areas of improvement). In some embodiments, the process of calculating the BPI is described in more detail in U.S. Patent Application No. 17/554,752 filed December 17, 2021, the entire disclosure of which is incorporated by reference herein.

In some embodiments, the user interface 1300 may be generated by the UI generator 616. The user interface 1300 displays BPI scores 1302 and penalty scores 1304 for a particular BMS, over time. For example, in user interface 1300, a user can select a time period (e.g., 1 week, 1 month, 3 moths, 6 months, 1 year, etc.) over which to view BPI values at graphical element 1306. In this case, a range of BPIs are shown over a 1 month period. In some embodiments, the BPI for this particular BMS may have been calculated once each day. For example, on January 27th, the BPI is shown in a "medium BPI" zone 1316 on the chart, indicating that the BPI is lower than an upper threshold (e.g., a "high BPI" zone 1314), but higher than a lower threshold (e.g., a "low BPI" zone 1318). The "medium BPI" zone 1316 may indicate that the BPI could be improved, but that the BMS is not overly inefficient. The "low BPI" zone 1318, on the other hand, may indicate that the BMS needs more immediate attention. For each day, the total penalty score is also provided in a bar graph. For example, on January 27th, a penalty score of roughly 10 was applied during the BPI calculation.

The user interface 1300 also includes user interface portions 1308, 1310 and 1312. User interface portion 1308 describes which BMS version is being run. User interface portion 1310 describes the engines includes within the BMS. For example, the engines may include one or more network automation engines (NAEs), one or more network integration engines (NIEs), or one or more network control engines (NCEs). User interface portion 1312 may describe one or more controllers associated with the BMS. For example, user interface portion 1312 may describe one or more field controllers or supervisory controllers.

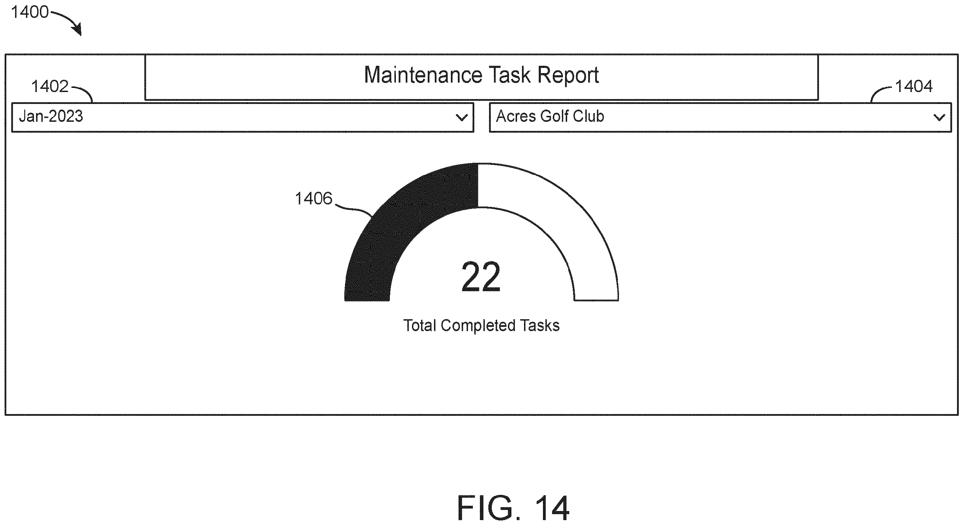

Referring now to FIG. 14, a user interface 1400 for graphically presenting a maintenance task report for a BMS is shown, according to some embodiments. The user interface 1400 provides a general overview of one or more maintenance tasks have been completed and which maintenance tasks still need to be completed. For example, user interface portion 1406 shows that 22 maintenance tasks have been completed which is approximately half of the total amount of maintenance tasks (e.g., tasks which still need to be completed plus tasks which have been completed). User interface portion 1402 describes the date of the maintenance task report. User interface portion 1404 describes the geographic location of the building for which the maintenance task report is generated.

In some embodiments, a user may interact with the user interface portion 1406 (e.g., by clicking or selecting the user interface portion, etc.) to navigate to another user interface which provides more details about the maintenance tasks. For example, by clicking the user interface portion1406, the user may navigate to user interface 1500 which provides more detail about the maintenance tasks. In other embodiments, the user may click or otherwise engage with any other portion of the user interface 1400 to navigate to the user interface 1500. The user interface 1500 may include filtering panels 1512, 1514, 1516, and 1518 which may be used to filter the maintenance tasks displayed in user interface 1500. For example, the filtering panel 1512 allows for a user to select maintenance tasks for particular building component or section (e.g., an AHU, an energy recovery unit (ERU), exhaust fans, generic pumps, etc.). As another example, the filtering panel 1514 allows for a user to select maintenance tasks for particular building sub-components or sub-sections (e.g., control performance verification, sensor health check, etc.). As another example, the filtering panel 1516 allows for a user to select only certain maintenance tasks to be included in the maintenance task report. As a final example, the filtering panel 1518 allows for a user to select only certain faults to be included in the maintenance task report.

The user interface 1500 includes a maintenance task report 1520 which displays the details of each of the maintenance tasks included by the filtering panels 1512, 1514, 1516, and 1518. Specifically, the maintenance tasks details may include the fault names 1502, fault equipment 1504, hours the fault has been active 1506, fault diagnostics 1508, and the latest occurrence date of the fault 1510.

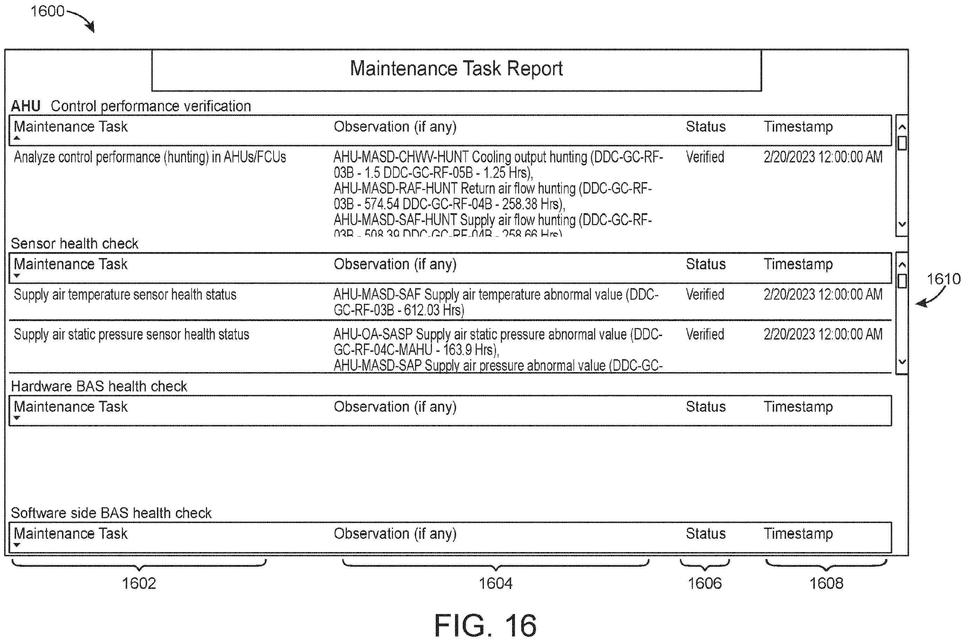

Referring now to FIG. 16, a user interface 1600 displaying a filtered maintenance task report for a specific building component is shown, according to an exemplary embodiment. For example, in the embodiment shown in user interface 1600, a maintenance task report 1610 for an air handling unit for the building is shown, according to an exemplary embodiment. The maintenance task report 1610 includes details about the maintenance tasks related to the air handling unit. These details may include the name of the maintenance task 1602, any observations related to the maintenance task 1604, the status of the maintenance task 1606, and the time the maintenance task was observed or completed 1608.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products including machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A system comprising:
- one or more memory devices having instructions stored thereon that, when executed by one or more processors, cause the one or more processors to perform operations comprising:
- receiving operating data for one or more pieces of building equipment;
- determining one or more building faults for the one or more pieces of building equipment based on the operating data;
- using a fault categorization model to categorize the one or more building faults as remote fix faults or on-site fix faults based on the operating data; and
- performing an automated action based on a categorization of the one or more building faults as remote fix faults or on-site fix faults.

2. The system of claim 1, the operations further comprising generating the fault categorization model based on one or more rules configured to categorize the building faults.

3. The system of any of claims 1-2,
wherein performing the automated action comprises displaying an indication of the one or more building faults and an indication of whether the one or more building faults is categorized as a remote fix fault or on-site fix fault

4. The system of any of claims 1-3,
wherein performing the automated action comprises automatically repairing the one or more building faults in response to categorizing the one or more building faults as remote fix faults.

5. The system of any of claims 1-4,
wherein the fault categorization model is a machine learning model, the operations further comprising training the machine learning model using a set of training data indicating historical building faults and historical corrective actions taken to resolve the historical building faults.

6. The system of claim 5, wherein the training data comprises:
- feedback from a user indicating the historical corrective actions and whether the historical corrective actions were successful in resolving the corresponding historical building faults; and/or
- updated operating data indicating the historical corrective actions and whether the historical corrective actions were successful in resolving the corresponding historical building faults.

7. The system of any of claims 1-6, the operations further comprising:
- determining that the one or more building faults have been resolved; and
- in response to determining that the one or more building faults have been resolved, display a corrective action taken to resolve the one or more building faults on a user device.

8. The system of claim 7,
wherein the determining that the one or more building faults have been resolved is based on at least one of a user feedback and the updated operating data for the one or more pieces of building equipment.

9. A method comprising:
- receiving, by one or more processors, operating data for one or more pieces of building equipment;
- determining, by one or more processors, one or more building faults for the one or more pieces of building equipment based on the operating data;
- using, by one or more processors, a fault categorization model to categorize the one or more building faults as remote fix faults or on-site fix faults based on the operating data; and
- performing, by the one or more processors, an automated action based on a categorization of the one or more building faults as remote fix faults or on-site fix faults.

10. The method of claim 9, further comprising generating the fault categorization model based on one or more rules configured to categorize the building faults.

11. The method of any of claims 9-10,
wherein performing the automated action comprises:
- displaying an indication of the one or more building faults and an indication of whether the one or more building faults is categorized as a remote fix fault or on-site fix fault; and/or
- automatically repairing the one or more building faults in response to categorizing the one or more building faults as remote fix faults.

12. The method of any of claims 9-11,
wherein the fault categorization model is a machine learning model, the method further comprising training the machine learning model using a set of training data indicating historical building faults and historical corrective actions taken to resolve the historical building faults

13. The method of claim 12, wherein the training data comprises:
- feedback from a user indicating the historical corrective actions and whether the historical corrective actions were successful in resolving the corresponding historical building faults; and/or
- updated operating data indicating the historical corrective actions and whether the historical corrective actions were successful in resolving the corresponding historical building faults

14. The method of any of claims 9-13,
wherein the method further comprises:
- determining, by the one or more processors, a fault resolution for the one or more building faults; and
- displaying, by the one or more processors, the fault resolution on a user device.

15. The method of claim 14,
wherein the determining that the one or more building faults has been resolved is based on at least one of a user feedback and the updated operating data for the one or more pieces of building equipment.
